# EUROPÄISCHE PATENTSCHRIFT

(11) **EP 1 167 796 B1**
(45) Veröffentlichungstag und Bekanntmachung des Hinweises auf die Patenterteilung: **02.04.2003**
(21) Anmeldenummer: 01112013.6
(22) Anmeldetag: 23.05.2001
(51) Int. Cl.: F16D 3/38, F16C 25/06, F16D 3/41, F16C 33/64

(54) **Druckring und Verfahren zur Herstellung eines Druckringes, Lagersystem für Zapfen von Zapfenkreuzen und Kreuzgelenkanordnung**
Pressure ring and its method of production, bearing system for universal joint trunnion
Anneau de pression et son procédé de fabrication, système de roulement pour un joint universel

(30) Priorität: 28.06.2000 DE 10030534
(43) Veröffentlichungstag der Anmeldung: 02.01.2002
(73) Patentinhaber: Voith Turbo GmbH & Co. KG, 89522 Heidenheim (DE)
(72) Erfinder: Lindenthal, Hans, 89522 Heidenheim (DE); Rösle, Hans, 89522 Heidenheim (DE); Grawenhof, Peter, 89547 Dettingen (DE)
(74) Vertreter: Dr. Weitzel & Partner

(56) Entgegenhaltungen:
- EP-A- 0 469 651
- EP-A- 0 785 370
- DE-A- 3 446 495
- US-A- 2 886 382
- US-A- 5 154 518
- US-A- 5 211 487

## Beschreibung

Die Erfindung betrifft einen Druckring für den Einsatz in Lagersystemen für Zapfen eines Zapfenkreuzes für den Einsatz in Gelenkwellen und ein Verfahren zur Herstellung eines Druckringes; ferner ein Lagersystem zur Lagerung eines Zapfens eines Zapfenkreuzes in einer Lagerbohrung einer Gelenkgabel für den Einsatz in Gelenkwellen und eine Kreuzgelenkanordnung mit einem derartigen Lagersystem.

Kreuzgelenkanordnungen, insbesondere die Lagersysteme zur Lagerung von Zapfen eines Zapfenkreuzes in Gelenkgabeln für den Einsatz in Gelenkwellen sind in einer Vielzahl von Ausführungen für eine Vielzahl von Einsatzbeispielen bekannt. Stellvertretend wird dazu auf einen Sonderdruck Voith Forschung und Konstruktion, Heft 33 (1998), Aufsatz 10 "Entwicklung wälzgelagerter Gelenkwellen für die Hauptantriebe schwerer Walzgerüste" sowie den Voith-Druck G 1135, 11.91, verwiesen. Diese Druckschriften offenbaren Ausführungen von Kreuzgelenkanordnungen für Gelenkwellen, welche wenigstens ein Zapfenkreuz umfassen, welches in wenigstens einer Gelenkgabel gelagert wird. Die Gelenkgabel selbst kann einteilig oder zweiteilig ausgeführt sein. Zur Anbindung des Zapfenkreuzes in der Gelenkgabel ist jeweils für den einzelnen Zapfen eine entsprechende Lageranordnung vorgesehen. Die Lageranordnung umfaßt dabei wenigstens ein Radiallager und ein Axiallager. Für die Anordnung des Axiallagers bestehen eine Vielzahl von Möglichkeiten, wobei jedoch unter Berücksichtigung der auftretenden Verformungen während des Betriebes der Gelenkwelle eine entsprechende konstruktive Auslegung der einzelnen Elemente der Lagerung erfolgt. Aus dem Aufsatz 10 aus Voith Forschung und Konstruktion, Heft 33, ist dabei eine Ausführung mit einem Radial-/Axiallager bekannt, bei welcher die einzelnen Bauelemente der Lagerung, die Dichtungen, die Anschlußkonstruktion der Lager und die das Drehmoment übertragenden Flanschverbindungen hinsichtlich der Spannungsverteilungen und Verformungen unter Last sorgfältig aufeinander abgestimmt sind. Das Radiallager besteht bei dieser Ausführung aus drei vollrolligen Zylinderrollenreihen, die im Innenring bordgeführt sind. Der Radiallager-Innenring stützt sich über einen Bund an den Zapfenstirnseiten ab. Ein nach außen weisender Bund am anderen Ringende bildet die innere Laufbahn des Axiallagers. Die Axialkraft wird bei dieser Ausführung über die Zapfenstimseite eingeleitet. Bei dieser Anordnung werden dabei die Werkstoffe der einzelnen Elemente den unterschiedlichen Funktionen entsprechend ausgewählt, d.h. hochfester Vergütungsstahl für das im Gesenk geschmiedete Zapfenkreuz und gewalzter Einsatzstahl für die Lagerhülse. Die Problematik einer derartigen Lageranordnung besteht darin, daß die einzelnen Wälzlager durch hohe Drehmomentstöße und gleichzeitige Querbeschleunigungen, insbesondere beim Einsatz in Walzwerksantrieben, beansprucht werden. Die stoßartigen Belastungen bei großen und sich rasch verändernden Beugewinkeln verursachen dabei elastische Verformungen der Gelenkgabel sowohl im Bereich der Flansche als auch innerhalb des Gabelauges. Die Bohrung weitet sich und nimmt dabei in der Regel eine unrunde Form an. Die größte Verformung am Zapfenkreuz verursacht jedoch die Einleitung der Umfangskraft. Ihre Richtung osziliert mit dem positiven oder negativen Wert des Betriebsbeugewinkels und wechselt außerdem mit jedem Reversiervorgang. Diese betriebs- sowie konstruktionsbedingten Einflüsse ergeben Fluchtungsfehler mit einer ungünstigen Lasteinleitung in das Lager, nämlich einen Mittenversatz der Gabelbohrung, Schrägstellung der Bohrung, Durchbiegung des Zapfens sowie ein Radialspiel im Wälzlager und die Einfederung des Wälzlagers. Die Folge ist dabei eine ungleichmäßige radiale Druckverteilung in der Lagerbohrung und führt von einer Linien- zur Punktberührung an den Kontaktstellen der Wälzkörper des Radiallagers und zu überhöhten Kantenspannungen. Die Wälzlageranschlußteile, Zapfenkreuz und Gelenkgabel, sind deshalb bezogen auf die Verformungswege aufeinander abgestimmt. Da die Axiallager von schweren Kreuzgelenken in der Regel im Wurzelbereich des Zapfens angeordnet sind, führen diese aufgezeigten Einflüsse zu einem Verkippen der Axiallager-Laufbahnen. Den größten Einfluß übt dabei die Verformung des Zapfens im Bereich der Wurzel aus, da hier die Krümmung der Biegelinie analog dem Biegemoment am größten ist. Dies führt in einem Segment des Axiallagers zu hohen Kantenspannungen und in dem gegenüberliegenden Segment zum Abheben der Rollen, was eine drastische Tragzahlminderung zur Folge hat. Um einen einfachen konstruktiven Aufbau einer Radial-/Axiallagereinheit der Kreuzgelenke zu ermöglichen, wurden daher bisher die Lagerhülse mit ihren Laufbahnen für beide Lager über Zylinder- und Stirnfläche des Zapfens zentriert und axial fixiert. Biegt sich nun der Zapfen unter einer Last durch, so folgt die Lagerhülse einer Tangente, die an der Biegelinie des Zapfenendes anliegt. Die Planparallelität bleibt somit auch bei Belastung des Zapfenkreuzes erhalten. Ein wesentlicher Nachteil einer derartigen Ausführung besteht jedoch darin, daß die Ausgestaltung der einzelnen Lagerelemente relativ kompliziert ist und eine Vielzahl von Elementen, insbesondere hinsichtlich der Ausführung des Lagerdeckels, bedingen. Bei der konstruktiven Ausführung, insbesondere Auslegung der einzelnen Bauelemente, ist dabei immer auf die möglicherweise auftretenden Verformungswege abzustellen, so daß es nicht möglich ist, unabhängig von der Kenntnis dieser Einflüsse eine befriedigende Konstruktion bereitzustellen.

Eine andere Lösung zur Anbindung der Lagerung ist aus der EP 0 785 370 A1 bekannt. Bei dieser ist dem Innenring des Radiallagers in Einbaulage in axialer Richtung innenliegend ein Bund zugeordnet, der sich radial von der Zapfenachse des in der Gelenkgabel gelagerten Zapfens wegerstreckt. Unter axialer Richtung wird eine Richtung im wesentlichen parallel zur Zapfenachse des in der Gelenkgabel gelagerten Zapfens verstanden, wobei die Betrachtungsweise ausgehend von der Gelenkachse erfolgt. Unter Gelenkachse wird dabei die verlängerte Achse des mit der Gelenkgabel verbundenen Bauteiles verstanden, die sich durch den direkten oder in eine Ebene projizierten Schnittpunkt der Zapfenachsen des Zapfenkreuzes erstreckt. Die Zapfenachsen der zueinander um jeweils 90° versetzten Zapfen können dabei in einer gemeinsamen Ebene liegen oder aber zueinander versetzt in einander parallelen Ebenen. Der Bund des Innenringes des Radiallagers bildet wenigstens mittelbar die in axialer Richtung äußere Lauffläche des Axiallagers. Dies bedeutet, daß der Bund zum einen direkt die Lauffläche für die Rollen oder die andersartig ausgeführten Wälzelemente des Axiallagers bilden kann. Andererseits besteht auch die Möglichkeit, daß lediglich die Lauffläche des Axiallagers, d.h. der Außenring des Axiallagers in Einbaulage bezogen auf den Zapfen betrachtet, sich an diesem abstützt. Der Außenring des Radiallagers weist in Einbaulage in axialer Richtung einen inneren Bund auf, der sich radial in Richtung zur Zapfenachse des in der Gelenkgabel gelagerten Zapfens erstreckt. Der Bund des Außenringes des Radiallagers bildet wenigstens mittelbar die in axialer Richtung innere Lauffläche des Axiallagers. Der Außenring weist des weiteren einen in Einbaullage in axialer Richtung außenliegenden sogenannten äußeren Bund auf, dem ein Anschlag im Gabelauge zugeordnet ist. Dem Innenring ist des weiteren ein in Einbaulage in axialer Richtung äußerer Bund zugeordnet, der zur Zapfenachse des in der Gelenkgabel gelagerten Zapfens hin ausgerichtet ist und einen axialen Anschlag für den Sitz des Innenringes im stimseitigen Bereich des Zapfens bildet. Dieser äußere Bund ist kraft- und/oder formschlüssig mit dem in der Gelenkgabel gelagerten Zapfen verbindbar. Dieser Bund kann derart ausgeführt sein, daß dieser mit dem Innenring eine bauliche Einheit bildet. Eine andere Möglichkeit besteht darin, daß der Bund von einem separaten Bauteil gebildet wird. Dieses separate Bauteil kann beispielsweise deckelförmig gestaltet sein. Der Deckel ist vorzugsweise derart gestaltet, daß dieser mit wenigstens einem ersten Teil seiner Deckelinnenfläche, unter welcher die in Einbaulage zur Gelenkachse gerichtete Deckelfläche verstanden wird, auf der Stirnseite des Zapfens des in der Gelenkgabel gelagerten Zapfens aufliegt und mit einem zweiten Teil seiner Deckelinnenfläche in Einbaulage einen Anschlag für den Innenring des Radiallagers bildet. Mit dieser Ausführung wird entgegen der ansonsten angestrebten steifen Lagerkonstruktion eine elastische Anbindung des Axiallagers erreicht. Diese Art der elastischen Anbindung führt insgesamt zu einem besseren Tragbild der einzelnen Lager des Lagersystems und damit einer höheren Lebensdauer der Lagereinheiten und auch der gesamten Kreuzzapfengelenkanordnung. Ein wesentlicher Nachteil einer derartigen Ausführung besteht jedoch darin, daß diese einen erheblichen konstruktiven und fertigungstechnischen Aufwand bedingt, da die Anbindung der Zapfen an den Gelenkgabelhälften eine Vielzahl von Bauelementen erfordert, welche die beschriebenen Funktionen übernehmen. Aufgrund der erforderlichen Abstimmung der einzelnen Elemente zueinander und der damit verbundenen einzuhaltenden Toleranzen ist die Schaffung einer derartigen Lageranordnung auch sehr kostenintensiv.

Desweiteren weisen insbesondere bei Kreuzgelenkanordnungen für schwere Gelenkwellen, bei denen die Lagerbohrung der Gelenkgabel geschlossen ausgeführt sein kann, das heißt als Blindbohrung gestaltet ist, und neben der Axiallagerung auch die Dichtungsbauteile im Bereich der Zapfenwurzel anzuordnen sind, die bekannten Lösungen einen erheblichen konstruktiven und fertigungstechnischen Aufwand auf da die Anbindung der Zapfen an den Gelenkgabelhälften eine Vielzahl von Bauelementen erfordert, welche die bereits für die anderen Ausführungen beschriebenen Funktionen übernehmen.

Ein anderer Druckring ist aus DE-A-34 46 495 bekannt.

Der Erfindung liegt daher die Aufgabe zugrunde, ein Lagersystem für Kreuzgelenkanordnungen der eingangs genannten Art, insbesondere für den Einsatz in schweren Gelenkwellen derart weiterzuentwickeln, daß die genannten Nachteile vermieden werden, d.h. dieses einen einfachen Aufbau sowie eine geringe Anzahl von Bauelementen aufweist. Die Ausschaltung der negativen Einflüsse bei Verformung der drehmomentübertragenden Bauteile auf die Lageranordnung, insbesondere das Axiallager soll dabei ohne Kenntnis der konkreten Lastfälle des Einsatzfalles mit einer möglichst standardisierten Lösung völlig oder zumindest nahezu ausgeschlossen werden können. Die Kreuzgelenkanordnung, insbesondere das Lagersystem und dessen Einzelelemente sollen sich dabei durch einen geringen konstruktiven und fertigungstechnischen Aufwand sowie niedrige Kosten auszeichnen.

Die erfindungsgemäße Lösung ist durch die Merkmale der Ansprüche 1, 11, 16, 18 und 19 charakterisiert. Vorteilafte Ausgestaltungen sind jeweils in den Unteransprüchen beschrieben.

Erfindungsgemäß wird ein ringförmiges Grundelement zur Bildung eines Druckringes für den Einsatz in einem Axiallager in einer Lageranordnung zur Lagerung eines Zapfens eines Zapfenkreuzes in einer Gelenkgabel beziehungsweise einer Gelenkgabelhälfte zur Bildung einer Lauffläche für die Wälzelemente des Axiallagers, insbesondere ein Axiallagerdruckring, an seiner die Lauffläche bildenden Oberfläche derart bearbeitet, daß dieser zumindest zwei bezüglich einer durch den theoretischen Mittelpunkt des ringförmigen Elementes sich erstreckenden Achse, insbesondere Symmetrieachse des Druckringes symmetrisch gestaltete beziehungsweise bearbeitete Flächenbereiche aufweist. Der einzelne Flächenbereich erstreckt sich dabei im wesentlichen vom Bereich der Symmetrieachse in Umfangsrichtung des Druckringes. Die Bearbeitung der Oberfläche erfolgt dabei derart, daß die Querschnittsfläche des Druckringes im bearbeiteten Bereich bei Betrachtung ausgehend vom Bereich der Symmetrieachse bis zu einer Senkrechten zur Symmetrieachse abnimmt, wobei die Dicke beziehungsweise Breite in Höhenrichtung des Druckringes betrachtet vom Innenumfang zum Außenumfang jeweils abnimmt. Der Druckring umfaßt neben einer ersten ebenen Stirnseite dabei eine zweite Stirnseite, welche zwei bezüglich einer ersten Symmetrieachse S_{D} des Druckringes im wesentlichen symmetrisch bearbeitete Flächenbereiche aufweist. Abweichungen aufgrund von Toleranzen in einem bestimmten Bereich sind möglich und sollen ebenfalls vom Schutzumfang mit umschlossen werden. Die erste Symmetrieachse verläuft dabei in einer Ansicht von oben auf den Druckring durch den theoretischen Mittelpunkt in radialer Richtung und unterteilt den Druckring theoretisch in zwei symmetrische Ringsegmente. Jeder der symmetrisch bearbeiteten Flächenbereiche ist hinsichtlich seines Verlaufes in Umfangsrichtung von der ersten Symmetrieachse S_{D} ausgehend in Umfangsrichtung bis zu einer weiteren zweiten, senkrecht zur.ersten Symmetrieachse S_{D} verlaufenden zweiten Symmetrieachse S_{DS} hin betrachtet, durch eine Querschnittsänderung des Druckringes beschreibbar, welche durch eine Abnahme der die Querschnittsfläche beschreibenden Dickenabmessungen im Bereich des Innenumfanges und des Außenumfanges des Druckringes charakterisiert ist, wobei im Bereich des Innenumfanges eine geringere Abnahme der Dickenabmessungen als: im Bereich des Außenumfanges vorliegt und sich somit eine Neigung der Oberfläche vom Innenumfang zum Außenumfang hin ergibt, welche ein bestimmtes Gefälle aufweist.

Die erfindungsgemäße Lösung ermöglicht bei Integration in ein Lagersystem zur Lagerung eines Zapfens in einer Gelenkgabel auch im belasteten Zustand eine einfach realisierbare Spielanpassung bei Verkippung der die Axiallagerlaufbahnen bildenden Elemente durch stetige Gewährleistung eines flächigen Anliegens der Wälzelemente an der entsprechenden Lauffläche des Axiallagers und somit ein gutes Tragbild.

Bezüglich der Ausbildung und/oder Anordnung der bearbeiteten Flächenbereiche bestehen eine Mehrzahl von Möglichkeiten, welche sich hinsichtlich der Erstreckung des bearbeiteten Bereiches in Umfangsrichtung als auch der Ausgestaltung des bearbeiteten Bereiches vom Innenumfang zum Außenumfang des Druckringes betrachtet, unterscheiden können. Im erstgenannten Fall besteht die Möglichkeit, die Bearbeitung ausgehend von der Symmetrieachse beidseitig jeweils in einem bestimmten Abstand von der Symmetrieachse aus vorzunehmen, das heißt, daß jeweils nur ein Segmentbereich des Druckringes beidseits der ersten Symmetrieachse in einem bestimmten Abstand zur Symmetrieachse bearbeitet wird. Eine weitere Möglichkeit besteht darin, die Bearbeitung bereits unmittelbar an der Symmetrieachse zu beginnen. Dies hängt jedoch vom konkreten Einsatzfall und den dort vorherrschenden Belastungen und damit der erforderlichen zu realisierenden Spielanpassung und der damit verbundenen erforderlichen Größe der kontinuierlichen Querschnittsänderung ab. Die Querschnittsflächen an der ersten Symmetrieachse S_{D} und im Bereich dieser sind aus Gründen einer einfachen Fertigung vorzugsweise durch gleiche Dickenabmessungen zwischen einschließlich Innenumfang und Außenumfang charakterisiert, d.h. daß die Stirnseiten des Druckringes im Bereich der ersten Symmetrieachse parallel zueinander sind.

Die Querschnittsänderung des Druckringes durch eine Abnahme der die Querschnittsfläche beschreibenden Dickenabmessungen erfolgt zur Vermeidung von Kantenpressungen in radialer Richtung ausgehend vom theoretischen Mittelpunkt in der Ansicht von oben auf den Druckring vorzugsweise direkt vom Innenumfang bis zum Außenumfang des Druckringes.

Die die Querschnittsänderung des Druckringes beschreibenden Änderungen der Dickenabmessungen gegenüber der Dickenabmessung an der ersten Symmetrieachse S_{D} liegen dabei bei kleineren und mittleren Gelenken im 10-tel mm-Bereich. Diese hängen jedoch im wesentlichen von der Größe der auftretenden Kräfte im Lagersystem der Kreuzgelenkanordnung und insbesondere der Größe der Umfangskraft und damit der auftretenden Verkippungen der die Laufbahn für die Wälzelemente bildenden Elemente des Axiallagers ab. Für große Gelenke und große zu übertragende Drehmomente können dabei Dickenunterschiede bis zu einschleißlich 2mm erforderlich sein. Beispielsweise betragen die die Querschnittsänderung des Druckringes beschreibenden Änderungen der Dickenabmessungen am Innenumfang zwischen der ersten Symmetrieachse S_{D} und der zweiten senkrecht zur ersten Symmetrieachse S_{D} verlaufenden Symmetrieachse S_{DS} zwischen 0 mm und 0,68 mm und am Außenumfang zwischen 0 und 0,8 mm für ein Axiallager bestimmter Größe. In Abhängigkeit der Größe des Axiallagers ändert sich der Abtrag in den bearbeiteten Flächenbereichen in entsprechend gleichen Proportionen.

Bezüglich der Ausführung der Querschnittsfläche bestehen ebenfalls eine Mehrzahl von Möglichkeiten. Diese ist im unbearbeiteten Zustand am ringförmigen Grundelement in Umfangsrichtung vorzugsweise durch einen quadratischen oder rechteckigen Querschnitt charakterisiert. Andere Ausführungen sind denkbar, jedoch sollte berücksichtigt werden, daß zumindest der theoretisch eine Lauffläche bildende Teil der Oberfläche des Druckringes eine ebene Fläche aufweist. Die Bearbeitung kann dabei derart erfolgen, daß der Abtrag vom Innenumfang zum Außenumfang vorgenommen wird oder aber das Schleifwerkzeug derart an der Oberfläche wirksam wird, daß ein Abtrag im Bereich der Senkrechten zur Symmetrieachse in einem bestimmten Abstand vom Innenumfang aus erfolgt, das heißt sich zwar im Bereich des Abtrages eine ebene Fläche, welche leicht geneigt ausgeführt ist, ergibt, wobei letztere Lösung nur für zu bearbeitende Stirnseiten mit unterschiedlichen Dickenbereichen zwischen Innenumfang und Außenumfang unter der Voraussetzung, daß die Dicke der Dickenbereiche am Innenumfang und am Außenumfang geringer ist als dazwischen, geeignet ist. Anderfalls ergeben sich Absätze, welche Kantenspannungen verursachen.

Der Druckring ist auf einfache Art und Weise fertigbar. Als Werkstoff werden vorzugsweise einsatzgehärtete Stähle oder andere mit einer Elastizität im Bereich von einschließlich 180000 N/mm² bis einschließlich 230000 N/mm² verwendet. Dieser weist als ringförmiges Grundelement im unbearbeiteten Zustand vorzugsweise zur einfachen Bearbeitung einen in Umfangsrichtung gleichmäßigen Querschnitt auf. Zur Herstellung der bearbeiteten Oberflächenbereiche wird das ringförmige Grundelement im Bereich seiner ersten Symmetrieachse beidseitig gegenüber einer Grundfläche verspannt. Vorher erfolgt eine gleichmäßige Unterlegung des ringförmigen Elementes durch ein Element bestimmter Höhe, vorzugsweise einen Flachstahl, welcher im Bereich der Senkrechten zur Symmetrieachse angeordnet und ausgerichtet wird. Dies bedeutet, daß der Bereich, welcher durch die Senkrechte zur Symmetrieachse beschreibbar ist - immer bezogen auf die Einspannung des Druckringes in der Spannvorrichtung - erhöht wird. Die Einspannung des ringförmigen Grundelementes bzw. des Druckringes im Bereich der Symmetrieachse erfolgt mit einer bestimmten vordefinierten Kraft. Diese ist wiederum abhängig von der Elastizität des Druckringes sowie des Unterlegelementes und des gewünschten Abtrages an der die Lauffläche bildenden Oberfläche des Druckringes und damit der zu bearbeitenden Flächenbereiche. Beidseitig der Symmetrieachse erfolgt nunmehr ein Abschleifvorgang, wobei das Schleifwerkzeug auf einen bestimmten Abtrag eingestellt ist und sich der unterschiedliche Abtrag in Umfangsrichtung nur aufgrund der elastischen Verformung des Druckringes ergibt. Dabei weisen der Abtrag in Umfangsrichtung des Druckringes betrachtet in einer Ansicht von oben als auch im Querschnitt betrachtet vom Innenumfang zum Außenumfang des Druckringes betrachtet, unterschiedliche Größen auf. Dabei kann das Schleifwerkzeug derart an der Oberfläche des Druckringes wirksam werden, daß der Abtrag bereits unmittelbar im Bereich der Symmetrieachse beginnt und sich über den Bereich, welcher durch die Senkrechte zur Symmetrieachse am Druckring beschreibbar ist, in Umfangsrichtung wieder in Richtung der Symmetrieachse erstreckt. Dies bedeutet, daß durch die Symmetrieachse der Druckring in zwei theoretische Ringssegmente unterteilbar ist, wobei durch die Senkrechte noch einmal eine Unterteilung der Segmente in zwei Quadranten erfolgt. Der Abtrag und damit die bearbeiteten Flächenbereiche an der Oberfläche des Druckringes sind derart ausgelegt, daß diese symmetrisch bezogen auf die erste Symmetrieachse ausgeführt sind. Ein bearbeiteter Bereich erstreckt sich somit im wesentlichen über ein halbringförmiges Segment des Druckringes.

Die Vorrichtung zur Bearbeitung des Druckringes umfaßt im einfachsten Fall zwei Spannmittel, welche im Bereich der ersten Symmetrieachse den Druckring mit einer bestimmten vordefinierten Kraft gegenüber einer Grundfläche verspannen und ein Unterlegmittel, welches im Bereich der Senkrechten zur Symmetrieachse den Druckring unterlegt. Als Spannmittel kommen im einfachsten Fall Schraubverbindungen in Betracht, ansonsten eine Spannvorrichtung.

Der Druckring zur Bildung einer Axiallagerlaufbahn kann dabei in Axiallagern für Lagersysteme zur Lagerung von Zapfenkreuzen in Gelenkgabeln in Gelenkwellen unterschiedlichster Ausführung eingesetzt werden. Dabei kommen insbesondere Ausführungen von Lagersystemen mit
a) Anordnung des Axiallagers im Bereich der Zapfenwurzel oder
b) Anordnung des Axiallagers im Bereich der Stirnfläche des in der Gelenkgabel gelagerten Zapfens oder
c) Anordnung des Axiallagers in einer im Bereich der Stirnfläche des Zapfens vorgesehenen Zapfenbohrung
in Betracht.

In beiden Fällen bildet der Druckring jeweils eine Lauffläche für die Wälzelemente des Axiallagers. Im erstgenannten Fall bildet der Druckring von der Gelenkachse G aus in Richtung zur Stirnfläche des in der Gelenkgabel gelagerten Zapfens betrachtet den inneren Laufring für die Wälzelemente des Axiallagers, während im zweiten Fall der Druckring die äußere Laufbahn bildet.

Um tatsächlich eine Spielanpassung zu gewährleisten ist es erforedrlich, die bearbeiteten Flächenbereiche in Einbaulage in Rotationsrichtung des Zapfenkreuzes betrachtet zu positionieren. Die Positionierung des Druckringes erfolgt derart, daß der Querschnitt mit der stärksten Dickenänderung in einer durch die Zapfenachsen der in den Gelenkgabeln gelagerten Zapfen beschreibbaren Ebene liegt. Vorzugseise sind dazu Mittel zur Positionierung der Lage der bearbeiteten Flächenbereiche in Einbaulage im Axiallager vorgesehen, welche eine Verdrehung aus dieser Lage verhindern sollen. Die Mittel umfassen dabei entweder mindestens einen am Außenumfang oder einer der Stirnflächen angeordneten Vorsprung, welcher im Einbauzustand mit einer an einem die Lagerumgebung bildenden Element vorgesehen Ausnehmung zusammenwirkt oder mindestens eine an einer der Stirnflächen angeordnete Ausnehmung, welche im Einbauzustand mit einem an einem die Lagerumgebung bildenden Element angeordneten Vorsprung zusammenwirkt.

Die erfindungsgemäße Lösung wird nachfolgend anhand von Figuren erläutert. Darin ist im einzelnen folgendes dargestellt:
- Figur 1a und 1b: verdeutlichen anhand zweier Ansichten eine Ausführung eines erfindungsgemäß gestalteten Druckringes;
- Figur 2: verdeutlicht in vereinfachter Darstellung den Grundaufbau einer Vorrichtung zur Herstellung eines erfindungsgemäß gestalteten Druckringes;
- Figur 3a: verdeutlicht eine Anwendung eines erfindungsgemäß gestalteten Druckringes in einem Lagersystem für eine Kreuzgelenkanordnung in einem Axiallager im Bereich der Zapfenwurzel;
- Figur 3b: verdeutlicht eine Anwendung eines erfindungsgemäß gestalteten Druckringes in einem Lagersystem für eine Kreuzgelenkanordnung in einem im Bereich der Stirnfläche des Zapfens angeordneten Axiallagers;
- Figur 4a und 4b: verdeutlichen einander gegenüber gestellt für eine Anordnung eines Druckringes in einem im Bereich der Zapfenwurzel angeordneten Axiallager sich einstellende Spielanpassung unter Belastung und die Problematik einer Ausführung konventioneller Art.

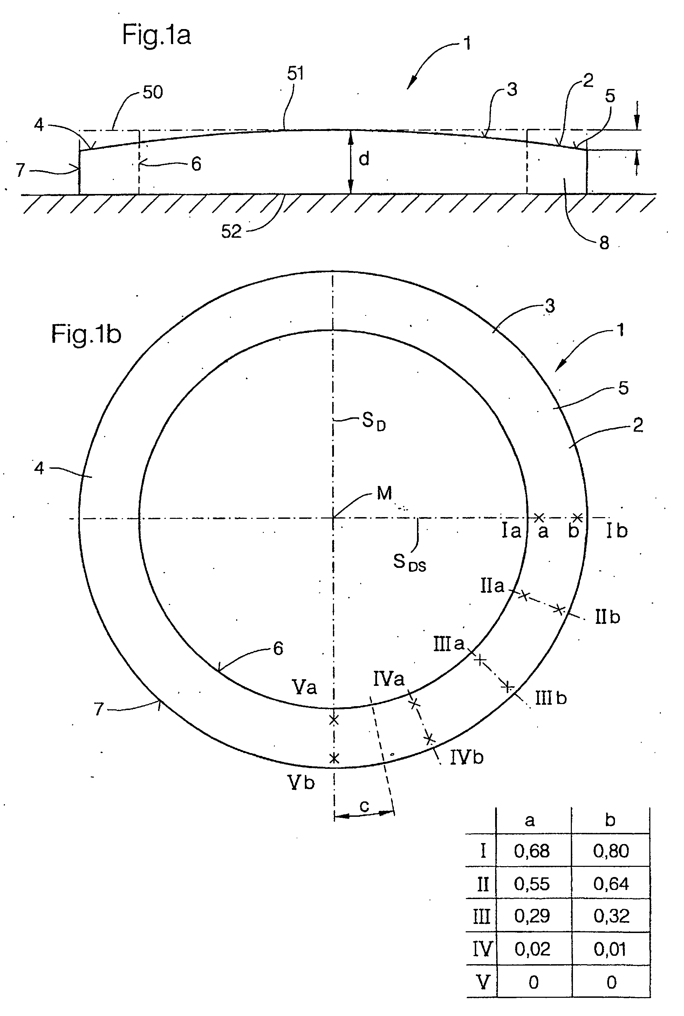

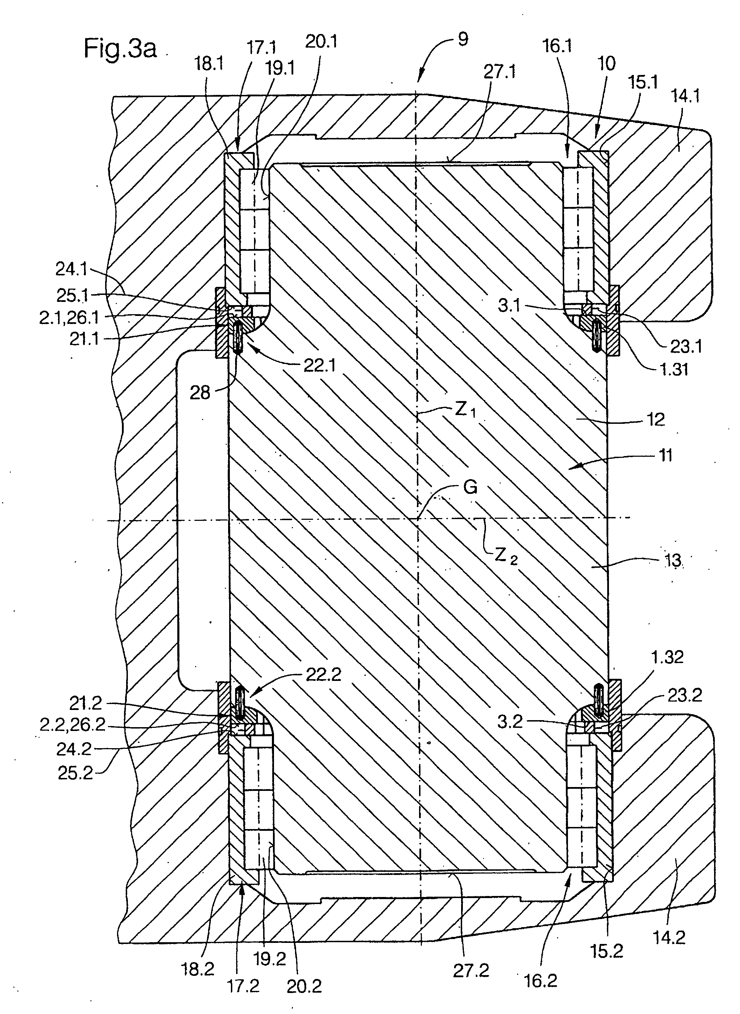

Die Figuren 1a und 1b verdeutlichen anhand zweier Ansichten die Ausführung eines erfindungsgemäß gestalteten Druckringes 1, welcher eine Lauffläche 2 für die Wälzelemente einer Axiallageranordnung zur Lagerung eines Zapfenkreuzes in einer Gelenkgabel bildet. Dabei ist es in Einbaulage unerheblich, ob der Druckring bezogen auf die Gelenkachse die äußere Lauffläche oder aber die innere Lauffläche der Wälzelemente des Axiallagers bildet. Bezüglich der Integration in einer Kreuzgelenkanordnung wird auf die Figuren 3a und 3b verwiesen.

Die Figur 1a verdeutlicht dabei eine Ansicht von rechts auf den Druckring 1, während die Figur 1b eine Ansicht von oben wiedergibt. Die Figur 1a verdeutlicht dabei den Druckring nach erfolgter Bearbeitung, insbesondere nach dem Korrekturschliff. Der ringförmige Grundkörper 50, aus welchem der erfindungsgemäße Druckring 1 gefertigt wird, ist zur Gegenüberstellung mittels unterbrochener Linien dargestellt. Die ertse Stirnseite 52 ist eben.

Aus Figur 1a wird ersichtlich, daß der Druckring 1 in Umfangsrichtung unterschiedliche Querschnitte aufweist. Zur Realisierung der Aufgabe des Druckringes 1 wird dieser an seiner die Lauffläche 2 bildenden Oberfläche 3 an der zweiten Stirnseite 51 dahingehend bearbeitet, daß die Lauffläche 2 unter Belastung des Axiallagers immer flächig an den Wälzelementen anliegt. Dazu weist der Druck 1 bezogen auf eine, sich durch den theoretischen Mittelpunkt M erstreckende erste Symmetrielinie S_{D} zwei symmetrisch zueinander angeordnete und bearbeitete Flächenbereiche 4 und 5 auf. Diese Bereiche 4 und 5 sind symmetrisch zueinander angeordnet und hinsichtlich des Querschnittes des Druckringes 1 in diesen Bereichen identisch ausgeführt. Die Bereiche 4 und 5 erstrecken sich dabei in Umfangsrichtung des Druckringes 1, wobei diese Bereiche vorzugsweise in einem bestimmten Abstand c von der Symmetrielinie S_{D} angeordnet sind, wobei jedoch theoretisch auch die Möglichkeit besteht, die Bearbeitung bereits ab der Symmetrielinie S_{D} vorzunehmen. Weist der Druckring 1 in unbearbeitetem Zustand, welcher gemäß der Figur 1a als ringförmiger Grundkörper 50 durch die unterbrochene Linie verdeutlicht ist, einen gleichmäßigen Querschnitt über seinen gesamten Umfang auf, ist die Querschnittsänderung in Umfangsrichtung in den bearbeiteten Flächenbereichen 4 und 5 dergestalt, daß diese zumindest in Umfangsrichtung variiert. Vorzugsweise erfährt dabei der Druckring 1 ausgehend von der Symmetrieachse S_{D} in Umfangsrichtung eine Bearbeitung, welche die größte Querschnittsänderung in den Bereichen 4 und 5 im Bereich der zur ersten Symmetrieachse S_{D} senkrecht verlaufenden zweiten Symmetrieachse S_{DS} bedingt. Dies bedeutet, daß in Umfangsrichtung in der Ansicht von oben auf den Druckring betrachtet der Abtrag im Bereich der Symmetrieachse S_{D} in der Regel am geringsten ist, in Umfangsrichtung zunimmt und im Bereich der Senkrechten S_{SD} zur Symmetrieachse S_{D} am größten ist. Des weiteren sind die beiden Flächenbereiche 4 und 5 dadurch charakterisiert, daß die Querschnittsänderung vom Bereich des Innenumfanges 6 in Richtung zum , Außenumfang 7 des Druckringes 1 zunimmt, das heißt, daß die den Querschnitt charakterisierenden Abmaße in Höhenrichtung, d.h. die Dickenabmessungen im Bereich des Innenumfanges größer sind als im Bereich des Außenumfanges 7. Die Figur 1b verdeutlicht dabei anhand unterschiedlicher Meßstellen in den einzelnen bearbeiteten Flächenbereichen 4 und 5 entsprechend der angegebenen Matrix beispielhaft die Querschnittsänderung in Umfangsrichtung. Der Abtrag im Bereich des Innenumfanges 6 ist mit a und im Bereich des Außenumfanges mit b bezeichnet. Daraus wird ersichtlich, daß die stärkste Querschnittsänderung an beiden Meßbereichen, das heißt im Bereich des Innenumfanges 6 und des Außenumfanges 7 im Bereich der Senkrechen S_{SD} zur Symmetrieachse S_{D} erfolgt. In Umfangsrichtung zur Symmetrieachse nimmt die Querschnittsfläche des Druckringes 1, welche auch mit 8 bezeichnet wird, zu, insbesondere erhöhen sich die Abmessungen des Druckringes 1 in vertikaler Richtung, das heißt dessen Dicke im Bereich des Innenumfanges 6, welche durch den Abtrag a gegenüber dem Zustand am Grundkörper 50 gekennzeichnet ist und im Bereich des Außenumfanges 7 durch den Abtrag b beschrieben wird. Die Querschnittsänderung muß dabei nicht zwangsläufig durch die Änderung der Abmessung in Höhenrichtung am Innenumfang 6 und am Außenumfang 7 erfolgen, sondern kann auch nur in einem Bereich zwischen beiden vorgenommen werden. Die Figur 1b verdeutlicht dabei die Anordnung unterschiedlicher Meßstellen I bis V im Bereich 4, wobei die Meßstelle V auf der Symmetrieachse S_{D} des Druckringes e, während die Meßstelle I auf der Senkrechten S_{SD} zur Symmetrieachse S_{D} angeordnet ist. Beispielhaft sind dabei für den Druckring 1 anhand einer Matrix Kennwerte für den Abtrag von der Oberfläche 3 des Druckringes 1 an den einzelnen Meßstellen im Bereich des Innenumfanges 6 und im Bereich des Außenumfanges 7 angegeben. Diese Meßstellen sind jeweils mit Iₐ bis Vₐ für den Innenumfang 6 und I_{b} bis V_{b} für den Außenumfang 7 des Druckringes 1 bezeichnet. Die Matrix verdeutlicht dabei den Abtrag ausgehend vom Grundzustand des Druckringes 1, das heißt in unbearbeitetem Zustand an den entsprechenden Meßstellen I_{I} bis V_{I} und I_{II} bis V_{II}. Bei einem kleineren oder größeren Axiallager und dem dazugehörigen Druckring ist der Abtrag bei etwa gleichen Proportionen entsprechend kleiner oder größer.

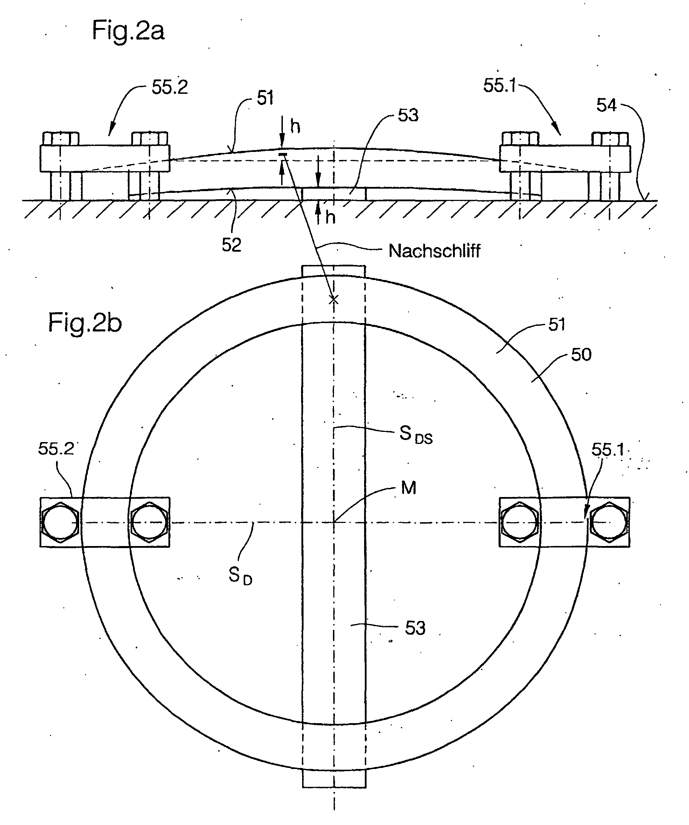

Die Figuren 2a und 2b verdeutlichen anhand zweier Ansichten das Grundprinzip des erfindungsgemäßen Verfahrens zur Herstellung des Druckringes 1 aus einem ringförmigen Grundelement 50 mit mindestens einer ebenen Stirnfläche 52. Dabei wird unter das ringförmige Grundelement 50 im Bereich einer durch den Mittelpunkt legbaren und sich jeweils in radialer Richtung erstreckenden Achse, insbesondere der zweiten Symmetrieachse S_{SD} ein sich entlang dieser Symmetrieachse erstreckendes Element 53 vordefinierter Höhe h zur Unterfüllung auf der ebenen Stirnfläche 52 untergelegt, welches sich gegenüber einer Grundfläche 54 abstützt. Das ringförmige Grundelement 50 wird im Bereich der weiteren Symmetrieachse S_{D}, welche senkrecht zur Symmetrieachse an welcher die Unterlegung erfolgt, ausgerichtet ist, und welche sich ebenfalls durch den Mittelpunkt M erstreckt, gegenüber der Grundfläche 54 oder einer in vertikaler Richtung in geringerer Höhe als die Grundfläche 54 angeordneten Fläche verspannt. Die Verspannung erfolgt hier über Schraubverbindungen 55.1 und 55.2. Der Abtrag an der Oberfläche der zweiten Stirnfläche 51 zur Erzeugung einer Querschnittsänderung erfolgt mittels eines hinsichtlich seiner Schleifkante parallel zur Grundfläche 54 oder der anderen Fläche und oberhalb der unterlegten ebenen Stirnfläche 52 angeordneten Schleifmittel.

Die Figur 3a verdeutlicht in schematisch vereinfachter Darstellung anhand eines Axialschnittes durch eine Kreuzgelenkanordnung 9 die Integration eines erfindungsgemäß gestalteten Druckringes, hier der Druckringe 1.31 und 1.32 in einer Axiallageranordnung 21.1 bzw. 21.2. Die Kreuzgelenkanordnung 9 umfaßt dazu ein Zapfenkreuz 11, welches mit seinen Zapfen 12 und 13 in einer Gelenkgabel 10, bestehend aus zwei Gelenkgabelhälften - einer ersten Gelenkgabelhälfte 14.1 und einer zweiten Gelenkgabelhälfte 14.2 -, im Bereich deren Lagerbohrungen 15, hier mit 15.1 beziehungsweise 15.2 mittels jeweils einer Lageranordnung 16, hier 16.1 und 16.2 gelagert ist. Die zu den in der Gelenkgabel 10 gelagerten Zapfen 12 und 13 um 90 Grad versetzt angeordneten Zapfen des Zapfenkreuzes 11 sind in einer weiteren, hier im einzelnen nicht dargestellten Gelenkgabel, umfassend ebenfalls zwei Gelenkgabelhälften, im Bereich von deren Lagerbohrungen mittels jeweils einer Lageranordnung gelagert. Die Gelenkgabel ist dabei beispielsweise mit einem, hier nicht dargestellten Maschinenteil der Antriebsseite und die hier nicht dargestellte Gelenkgabel für die anderen Zapfen des Zapfenkreuzes 11 mit einem Maschinenteil der Abtriebsseite gekoppelt. Die Zapfenachsen Z1 und Z2 des Zapfenkreuzes 11, unter denen die Achse durch die Zapfen 12 und 13 beziehungsweise die beiden senkrecht dazu verlaufenden, hier nicht dargestellten Zapfen verstanden werden, können dabei wie dargstellt in einer Ebene oder in zwei zueinander parallel versetzten Ebenen angeordnet sein. Die Lageranordnung 16.1 beziehungweise 16.2 für die Zapfen 12 und 13 umfaßt ein Radiallager 17, für den Zapfen 12 mit 17.1 und den Zapfen 13 mit 17.2 bezeichnet. Das Radiallager 17.1 beziehungsweise 17.2 umfaßt jeweils einen Außenring 18.1 beziehungsweise 18.2 und Wälzelemente 19.1 und 19.2. Die innere Lauffläche 20.1 bzw. 20.2 wird vom Außenumfang der Zapfen 12 bzw. 13 gebildet. Des weiteren umfaßt die Lageranordnung 16.1 beziehungsweise 16.2 ein Axiallager 21.1 beziehungsweise 21.2, welches im Bereich der Zapfenwurzel 22.1 des Zapfens 12 beziehungsweise 22.2 des Zapfens 13 angeordnet ist. Das Axiallager 21.1 beziehungsweise 21.2 umfaßt wenigstens Wälzelemente 23.1 beziehungsweise 23.2. Die Wälzelemente 23.1 beziehungsweise 23.2 stützen sich an einer zu Gelenkachse G, unter welcher die Achse durch den in eine Ebene gelegten Schnittpunkt der Zapfenachsen Z1 und Z2 zu verstehen ist, gerichteten Stirnfläche 24.1 beziehungsweise 24.2 des Außenringes 18.1 beziehungsweise 18.2 des Radiallagers 17.1 beziehungsweise 17.2 ab. Dabei bildet die zur Gelenkachse G gerichtete Stirnfläche 24.1 beziehungsweise 24.2 des Außenringes 18.1 beziehungsweise 18.2 des Radiallagers 17.1 beziehungsweise 17.2 die äußere Lauffläche 25.1 beziehungsweise 25.2 für die Wälzelemente 23.1 beziehungsweise 23.2 des Axiallagers. Die innere Lauffläche 26.1 beziehungsweise 26.2 ist bei Betrachtungsweise von der Gelenkachse G in Richtung zur Stirnfläche 27.1 des Zapfens 12 und der Stirnfläche 27.2 des Zapfens 13 wird vom Druckring 1.31 bzw. 1.32, insbesondere dem die Lauffläche 2.1 bzw. 2.2 bildenden Bereich gebildet. Dabei erfolgt der Einbau des Druckringes 1.31 bzw. 1.32 in Einbaulage derart - hier jedoch nicht dargestellt -, daß die Bereiche größten Abtrages, das heißt die Bereiche 4 und die Bereiche 5 jeweils in Umfangsrichtung des Zapfenkreuzes 11 angeordnet sind. Zu diesem Zweck kann zur Erleichterung des Einbaus und der Vermeidung von Verschiebungen in Umfangsrichtung ein entsprechender Anschlag 28 entweder am Druckring 1, welcher mit einer entsprechenden Ausnehmung an der Gelenkgabel 14.1 in Wirkverbindung tritt oder aber an der Gelenkgabel vorgesehen werden, wobei eine entsprechende komplementäre Aussparung am Druckring 1.31 bzw. 1.32 vorzusehen wäre. Dieser Anschlag kann einteilig mit dem Druckring ausgeführt sein oder aber von mindestens einem separaten Elment gebildet werden, im dargestellten Fall einer Reihe von Stiften 28, welche die Lage des Druckringes 1.31 gegenüber dem Zapfen 12 in Umfangsrichtung fixieren und gleichzeitig als Befestigungsmittel fungieren. Vorzugsweise wird jedoch die erste Variante gewählt, das heißt, daß ein entsprechender Anschlag am Druckring 1 vorgesehen ist, welcher beispielsweise in Form eines Vorsprunges ausgebildet sein kann. Andernfalls ist es erforderlich, beim Einbau-des Axiallagers 21.1 beziehungsweise 21.2 besonders auf die Ausrichtung der Bereiche 4 und 5 zu achten. Im dargestellten Fall erfolgt der Einbau des Druckringes 1 derart, daß die Symmetrieachse S_{D} in einer Ebene, welche durch die Gelenkachse und die Zapfenachsen Z1 beziehungsweise Z2 beschreibbar ist, liegt. Die Senkrechte S_{DS} zur Symmetrieachse S_{D} des Druckringes 1 verläuft dabei senkrecht zu der durch die Gelenkachse G und die Zapfenachse Z1 und Z2 beschriebenen Ebene.

Bei der dargestellten Lagerung werden die durch die Querbeschleunigung entstehenden Axialkräfte, welche in Richtung der Zapfenachse Z1 von der Gelenkachse G weg, hier beispielsweise in Richtung der Gelenkgabelhälfte 14.2 wirken, zu einer Belastung des in dieser Richtung liegenden Axiallagers 21.2 und zu einer Entlastung des in Zapfenachsrichtung entgegen der Wirkungsrichtung der Axialkräfte auf der Seite der Gelenkgabelhälfte 14.1 liegenden Axiallagers 21.1 führen. Das entlastete Lager kann in diesem Betriebszustand auch als passives Lager und das belastete als aktives Lager bezeichnet werden. In dieser Ausführung bewirkt eine in Richtung der Zapfenachse Z1 zur zweiten Gelenkgabelhälte 14.2 von der Gelenkachse G wegwirkende Axialkraft eine axiale Verschiebung des Außenringes 18.2 des Radiallagers 17.2, wodurch das Axiallager 21.1 entlastet wird. Es erfolgt keine Kraftübertragung über dieses Axiallager 21.1. An der Gelenkgabelhälfte 14.2 wird der Außenring 18.2 des Radiallagers 17.2 einer Druckbeanspruchung unterzogen. Die Axialkraft stützt sich dann über den auf Druck beanspruchten äußeren Bund des Radiallagers 17.2 auf der Gelenkgabelhälfte 14.2 ab.

Die Verformung der drehmomentübertragenden Bauteile eines Kreuzzapfengelenkes 9 ist in Umfangsrichtung der Kraft dabei derart extrem, daß es in der Lagerung zu einer ungleichmäßigen Lastverteilung kommen kann und nur ein Bruchteil der möglichen Tragzahl genutzt wird. Die dabei fehlende Planparallelität der Axiallagerlaufbahnen bewirkt in der Regel eine vorzeitige Ermüdung der Laufbahnen und Wälzkörper und/oder plastische Verformungen mit ihren Folgen (Pittings). Andererseits werden die zugesicherten dynamischen und statischen Tragzahlen der Lager durch die Lagerhersteller nur in einer steifen Lageranschlußkonstruktion garantiert. Um die Planparallelität der Laufbahnen des Axiallagers 25.1 und 26.1 beziehungsweise 25.2 und 26.2 bei zusätzlich wirkender Umfangskraft zu gewährleisten, ist der erfindungsgemäß gestaltete Druckring, welcher im dargestellten Fall die innere Lauffläche 26.1 beziehungsweise 26.2 bildet, derart integriert, daß unter Belastung immer eine Linienberührung einer Mehrzahl von Wälzelementen an dem die innere Lauffläche 26.1 beziehungsweise 26.2 bildenden Oberfläche 3.1 bzw. 3.2 des Druckringes 1.31 bzw. 1.32 anliegen, d.h. eine Anzahl Wälzkörper stellt in kürzestem Abstand den Kontakt zwischen beiden Laufbahnen her.

Figur 3b verdeutlicht in schematisch vereinfachter Darstellung den Grundaufbau einer Kreuzgelenkanordnung 30 ohne Darstellung der radialen Führungselemente, umfassend ein Zapfenkreuz 31, deren Zapfen 32 beziehungsweise 33 in einer Gelenkgabel 34 gelagert sind. Die dazu erforderliche Lageranordnung 35 für einen Zapfen umfaßt dazu ein Radiallager 36 und ein Axiallager 37. Das Zapfenkreuz 31 stützt sich dabei mit den Zapfen 32 beziehungsweise 33 in der Gelenkgabel 34 im Bereich von deren Lagerbohrungen 38 ab. Die Abstützung erfolgt über die Lagerbohrung 38 wenigstens mittelbar an der Gelenkgabel 34. Das Radiallager 36 umfaßt hier einen Außenring 39 und Wälzelemente 40. Die innere Lauffläche 41 kann von einem separaten Innenring oder wie dargestellt vom Außenumfang der Zapfen 32 bzw. 33 gebildet werden. Das Axiallager 37 ist im Bereich der von der Gelenkachse G wegweisenden Stirnfläche 42 des Zapfens 32 angeordnet. Dabei kann das Axiallager 37 - hier nicht dargestellt - in einer im Bereich der Stirnfläche 42 des Zapfens 32 angeordneten Zapfenbohrung angeordnet werden oder aber unmittelbar an der Stirnfläche 42. Im erstgenannten Fall würde sich die Zapfenbohrung 43 vorzugsweise jeweils von der Stirnseite 42 in Richtung der Zapfenachse Z1 erstrecken und eine Symmetrieachse aufweisen, welche mit der Zapfenachse Z1 zusammenfällt. Das Axiallager 37 umfaßt die Wälzelemente 44, welche sich jeweils an einer zur Gelenkachse G, unter welcher die Achse durch den in eine Ebene gelegten Schnittpunkt der Zapfenachsen des Zapfenkreuzes zu verstehen sind, gerichteten Stirnfläche 43 des Druckringes 1 und einer weiteren Stirnfläche, die entweder von der Stirnfläche 42 des Zapfens 32 gebildet wird oder einem separaten zwischen Wälzelementen 44 und Stirnfläche 42 des Zapfens 32 angeordneten Element, ab. Eine erste innere Lauffläche 45 für die Wälzelemente 44 des Axiallagers 37 wird dabei beispielsweise von der Stirnfläche 42 des Zapfens 32, gebildet, während die zweite äußere Lauffläche 47 vom Druckring 1 gebildet wird, der beispielsweise an der Innenfläche 46 der als Blindbohrung ausgeführten Lagerbohrung 38 in der Gelenkgabel 34 zum Anliegen kommt.

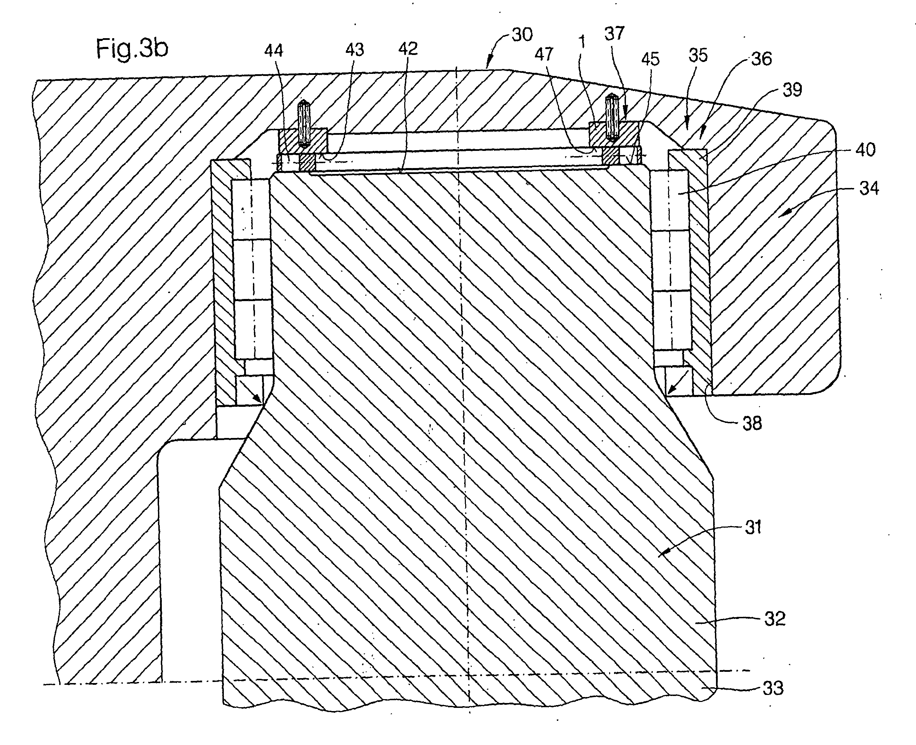

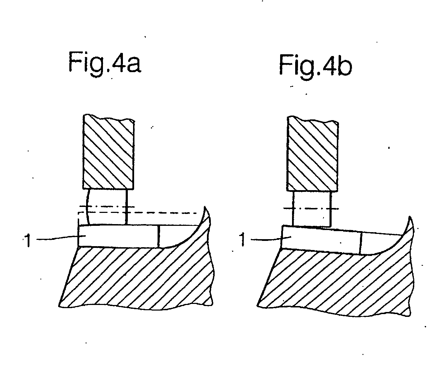

Die Figuren 4a und 4b verdeutlichen stark schematisiert einander gegenüber gestellt die Auswirkungen der Umfangskraft auf die Lage der Axiallagerlaufbahnen einer Lösung gemäß Figur 2 und einer konventionellen Lösung ohne erfindungsgemäßen Druckring.

### Bezugszeichenliste

- 1: Druckring
- 2: Lauffläche
- 3: Oberfläche
- 4: bearbeiteter Flächenbereich
- 5: bearbeiteter Flächenbereich
- 6: Innenumfang
- 7: Außenumfang
- 8: Querschnittsfläche
- 9: Kreuzgelenkanordnung
- 10: Gelenkgabel
- 11: Zapfenkreuz
- 12: Zapfen
- 13: Zapfen
- 14.1: erste Gelenkgabelhälfte
- 14.2: zweite Gelenkgabelhälfte
- 15: Lagerbohrung
- 15.1: Lagerbohrung in der ersten Gelenkgabelhälfte
- 15.2: Lagerbohrung in der zweiten Gelenkgabelhälfte
- 16: Lageranordnung
- 16.1: Lageranordnung zur Lagerung des Zapfens 12 in der ersten Gelenkgabelhälfte
- 16.2: Lageranordnung zur Lagerung des Zapfens 13 in der zweiten Gelenkgabelhälfte
- 17.1: Radiallager der ersten Lageranordnung 16.1
- 17.2: Radiallager der zweiten Lageranordnung 16.2
- 18.1: Außenring des Radiallagers 17.1
- 18.2: Außenring des Radiallagers 17.2
- 19.1: Wälzelemente des Radiallagers 17.1
- 19.2: Wälzelemente des Radiallagers 17.2
- 20.1: innere Lauffläche
- 20.2: innere Lauffläche
- 21.1: Axiallager
- 21.2: Axiallager der Lageranordnung 16.2.
- 22.1: Zapfenwurzel des Zapfens 12
- 22.2: Zapfenwurzel des Zapfens 13
- 23.1: Wälzelemente des Axiallagers 21.1
- 23.2: Wälzelemente des Axiallagers 21.2
- 24.1: Stirnfläche
- 24.2: Stirnfläche
- 25.1: äußere Lauffläche des Axiallagers 21.1
- 25.2: äußere Lauffläche des Axiallagers 21.2
- 26.1: innere Lauffläche des Axiallagers 21.1
- 26.2: innere Lauffläche des Axiallagers 21.2
- 27.1: Stirnfläche des Zapfens 12
- 27.2: Stirnfläche des Zapfens 13
- 28: Anschlag
- 30: Kreuzgelenkanordnung
- 31: Zapfenkreuz
- 32: Zapfen
- 33: Zapfen
- 34: Gelenkgabel
- 35: Lageranordnung
- 36: Radiallager
- 37: Axiallager
- 38: Lagerbohrung
- 39: Außenring
- 40: Wälzelemente
- 41: Innenring
- 42: Stirnfläche
- 43: Stirnfläche des Druckringes
- 44: Wälzelemente
- 45: innere Lauffläche
- 46: Innenfläche
- 47: äußere Lauffläche
- 50: ringförmiger Grundkörper
- 51: zweite Stimseite
- 52: erste Stirnseite
- 53: Element
- 54: Grundfläche
- 55.1, 55.2: Schraubverbindung
- S_{D}: Symmetrieachse des Druckringes
- S_{SD}: Senkrechte zur Symmetrieachse S_{SD} des Druckringes
- a: Abtrag
- b: Abtrag
- c: Abstand
- d: Dicke
- I: erste Meßstelle
- II: zweite Meßstelle
- III: dritte Meßstelle
- IV: vierte Meßstelle
- V: fünfte Meßstelle

## Patentansprüche

1. Druckring (1), insbesondere Axiallagerdruckring zur Bildung einer Lauffläche für Wälzelemente, für den Einsatz in Lagersystemen für Zapfenkreuze von Gelenkwellen;
mit einer ersten ebenen Stirnseite und einer zweiten Stirnseite;
mit zwei bezüglich einer ersten Symmetrieachse S_{D} des Druckringes symmetrisch bearbeiteten Flächenbereichen an der zweiten Stirnseite;
jeder der symmetrisch bearbeiteten Flächenbereiche ist hinsichtlich seines Verlaufes in Umfangsrichtung von der ersten Symmetrieachse ausgehend in Umfangsrichtung bis zu einer weiteren zweiten, senkrecht zur ersten Symmetrieachse S_{D} verlaufenden zweiten Symmetrieachse S_{SD} hin betrachtet, durch eine Querschnittsänderung des Druckringes beschreibbar, welche durch eine Abnahme der die Querschnittsfläche beschreibenden Dickenabmessungen im Bereich des Innenumfanges und des Außenumfanges des Druckringes charakterisiert ist, wobei im Bereich des Innenumfanges eine geringere Abnahme der Dickenabmessungen als im Bereich des Außenumfanges vorliegt.

2. Druckring (1) nach Anspruch 1, dadurch charakterisiert, daß die bearbeiteten Flächenbereiche in Umfangsrichtung betrachtet in einem Abstand (c) zur ersten Symmetriechse S_{D} angeordnet sind.

3. Druckring (1) nach Anspruch 1 oder 2, dadurch charakterisiert, daß die Querschnittsänderung des Druckringes durch eine Abnahme der die Querschnittsfläche beschreibenden Dickenabmessungen direkt am Innenumfang und am Außenumfang des Druckringes charakterisiert ist.

4. Druckring (1) nach einem der Ansprüche 1 bis 3, **dadurch gekennzeichnet, daß** die Querschnittsflächen an der ersten Symmetrieachse S_{D} durch gleiche Dickenabmessungen zwischen einschließlich Innenumfang und Außenumfang charakterisiert sind.

5. Druckring (1) nach einem der Ansprüche 1 bis 4, **dadurch gekennzeichnet, daß** die die Querschnittsänderung des Druckringes beschreibenden Änderungen der Dickenabmessungen gegenüber den Dickenabmessungen an der ersten Symmetrieachse S_{D} im 10-tel mm-Bereich liegen.

6. Druckring (1) nach Anspruch 5, **dadurch gekennzeichnet, daß** die die Querschnittsänderung des Druckringes beschreibenden Änderungen der Dickenabmessungen am Innenumfang zwischen der ersten Symmetrieachse S_{D} und der zweiten senkrecht zur ersten Symmetrieachse S_{D} verlaufenden Symmetrieachse S_{DS} zwischen O mm und 0,68 mm und am Außenumfang zwischen 0 und 0,8 mm betragen.

7. Druckring (1) nach einem der Ansprüche 1 bis 6, **dadurch gekennzeichnet, daß** dieser aus einem Werkstoff mit einer Elastizität im Bereich von einschließlich 180000 N/mm² bis einschließlich 230000 N/mm² besteht.

8. Druckring (1) nach Anspruch 7, **dadurch gekennzeichnet, daß** dieser aus einem wärmebehandelten, insbesondere einsatzgehärteten Stahl besteht.

9. Druckring (1) nach einem der Ansprüche 1 bis 8, **gekennzeichnet durch** die folgenden Merkmale:
mit Mitteln zur Positionierung der Lage der bearbeiteten Flächenbereiche in Einbaulage im Axiallager;
die Mittel umfassen mindestens einen am Außenumfang oder einer der Stirnflächen angeordneten Vorsprung, welcher im Einbauzustand mit einer an einem die Lagerumgebung bildenden Element vorgesehen Ausnehmung zusammenwirkt.

10. Druckring (1) nach einem der Ansprüche 1 bis 8, **gekennzeichnet durch** die folgenden Merkmale:
mit Mitteln zur Positionierung der Lage der bearbeiteten Flächenbereiche in Einbaulage im Axiallager;
die Mittel umfassen mindestens eine an einer der Stirnflächen angeordnete Ausnehmung, welche im Einbauzustand mit einem an einem die Lagerumgebung bildenden Element angeordneten Vorsprung zusammenwirkt.

11. Verfahren zur Herstellung eines Druckringes (1) gemäß einem der Ansprüche 1 bis 10 aus einem ringförmigen Grundelement mit mindestens einer ebenen Stirnfläche, **gekennzeichnet durch** die folgenden Merkmale:
unter das ringförmige Grundelement wird im Bereich einer **durch** den Mittelpunkt legbaren und sich jeweils in radialer Richtung erstreckenden Achse, insbesondere Symmetrieachse ein sich entlang dieser Symmetrieachse erstreckendes Element vordefinierter Höhe zur Unterfüllung auf der ebenen Stirnfläche untergelegt, welches sich gegenüber einer Grundfläche abstützt;
das ringförmige Grundelement wird im Bereich einer weiteren Symmetrieachse, welche senkrecht zur Symmetrieachse an welcher die Unterlegung erfolgt, ausgerichtet ist, und welche sich ebenfalls **durch** den Mittelpunkt erstreckt, gegenüber der Grundfläche oder einer in vertikaler Richtung in geringerer Höhe als die Grundfläche angeordneten Fläche verspannt;
ein hinsichtlich seiner Schleifkante parallel zur Grundfläche oder der anderen Fläche und oberhalb der unterlegten ebenen Stirnfläche angeordnetes Schleifmittel wird an der Oberfläche der zweiten Stirnfläche zur Erzeugung einer Querschnittsänderung wirksam.

12. Verfahren nach Anspruch 11, **dadurch gekennzeichnet, daß** das Schleifmittel parallel zur Symmetrieachse, welche senkrecht zur Symmetrieachse an welcher die Unterlegung erfolgt, verläuft, geführt wird.

13. Verfahren nach Anspruch 11 oder 12, **dadurch gekennzeichnet, daß** das ringförmige Grundelement im Ausgangszustand einen konstanten Querschnitt in Umfangsrichtung aufweist.

14. Verfahren nach einem der Ansprüche 11 bis 13, **dadurch gekennzeichnet, daß** die Querschnittsänderung am ringförmigen Grundelement durch die Höhe der Unterlegung und/oder die Anordnung der Schleifkante bestimmbar ist.

15. Verfahren nach einem der Ansprüche 1 bis 14, **dadurch gekennzeichnet, daß** die Unterfüllung gegenüber dem ringförmigen Grundelement gegenüber Verdrehung gesichert wird.

16. Lagersystem für einen Zapfen eines Zapfenkreuzes in einer Lagerbohrung einer Gelenkgabel für den Einsatz in Gelenkwellen;
mit einem Radiallager, umfassend wenigstens einen Außenring und Wälzelemente;
mit einem im Bereich der Zapfenwurzel des Zapfens angeordneten Axiallager;
das Axiallager umfaßt Wälzelemente, ein, eine äußere Lauffläche für die Wälzelemente des Axiallagers tragendes Element und ein, eine innere Lauffläche für die Wälzelemente tragendes Element;
das eine innere Lauffläche für die Wälzelemente tragende Element wird von einem Druckring (1) gemäß einem der Ansprüche 1 bis 10 gebildet.

17. Lagersystem nach Anspruch 16, **dadurch gekennzeichnet, daß** das eine äußere Lauffläche für die Wälzelemente des Axiallagers tragende Element vom Außenring des Radiallagers gebildet wird oder sich an diesem in axialer Richtung abstützt.

18. Lagersystem für einen Zapfen eines Zapfenkreuzes in einer Lagerbohrung einer Gelenkgabel für den Einsatz in Gelenkwellen;
mit einem Radiallager, umfassend wenigstens einen Außenring und Wälzelemente;
mit einem im Bereich der Stirnseite des in der Gelenkgabelhälfte gelagerten Zapfens angeordneten Axiallager;
das Axiallager umfaßt Wälzelemente, ein, eine äußere Lauffläche für die Wälzelemente des Axiallagers tragendes Element und ein, eine innere Lauffläche für die Wälzelemente tragendes Element;
das die äußere Lauffläche für die Wälzelemente tragende Element wird von einem Druckring gemäß einem der Ansprüche 1 bis 10 gebildet.

19. Kreuzgelenkanordnung
mit einem, in zwei, zueinander um 90° versetzt zueinander angeordneten Gelenkgabeln gelagerten Zapfenkreuz;
jede Gelenkgabel weist für jeweils einen Zapfen des Zapfenkreuzes eine Lagerbohrung auf;
jeder Zapfen ist mittels eines Lagersystems gemäß einem der Ansprüche 16 bis 17 oder 18 in einer Lagerbohrung der Gelenkgabel gelagert.

20. Kreuzgelenkanordnung nach Anspruch 19, **dadurch gekennzeichnet, daß** die Lagerbohrungen als Blindbohrung ausgeführt sind.

21. Kreuzgelenkanordnung nach Anspruch 19 oder 20, **dadurch gekennzeichnet, daß** die einzelne Gelenkgabel zweiteilig ausgeführt ist.

22. Kreuzgelenkanordnung nach einem der Ansprüche 19 bis 21, **dadurch gekennzeichnet, daß** die Zapfen des Zapfenkreuzes in zwei zueinander parallelen und versetzt angeordneten Ebenen angeordnet sind.

23. Kreuzgelenkanordnung nach einem der Ansprüche 19 bis 22, **dadurch gekennzeichnet, daß** in Einbaulage in Rotationsrichtung des Zapfenkreuzes betrachtet die Positionierung des Druckringes derart erfolgt, daß der Querschnitt mit der stärksten Dickenänderung in einer durch die Zapfenachsen der in den Gelenkgabeln gelagerten Zapfen beschreibbaren Ebene liegt.

## Claims

1. Thrust ring (1), in particular an axial bearing thrust ring for forming a race for rolling elements, for use in bearing systems for journal crosses of cardan shafts; having a first flat face and a second face; having two surface areas machined symmetrically relative to a first axis of symmetry S_{D} of the thrust ring; each of the symmetrically machined surface areas is in terms of its shape in the peripheral direction, viewed from the first axis of symmetry in the peripheral direction to a further second axis of symmetry S_{SD} extending at right angles to the first axis of symmetry S_{D}, describable by a cross-sectional variation of the thrust ring **characterised by** a decrease of the thickness dimensions, which describe the cross-sectional area, in the region of the inner periphery and of the outer periphery of the thrust ring, wherein in the region of the inner periphery there is a smaller decrease of the thickness dimensions than in the region of the outer periphery.

2. Thrust ring (1) according to claim 1, **characterised in that** the machined surface areas are disposed, viewed in the peripheral direction, at a distance (c) from the first axis of symmetry S_{D}.

3. Thrust ring (1) according to claim 1 or 2, **characterised in that** the cross-sectional variation of the thrust ring is **characterised by** a decrease of the thickness dimensions, which describe the cross-sectional area, directly at the inner periphery and at the outer periphery of the thrust ring.

4. Thrust ring (1) according to any one of claims 1 to 3, **characterised in that** the cross-sectional areas at the first axis of symmetry S_{D} are **characterised by** identical thickness dimensions between and including inner periphery and outer periphery.

5. Thrust ring (1) according to any one of claims 1 to 4, **characterised in that** the variations of the thickness dimensions describing the cross-sectional variation of the thrust ring are, compared to the thickness dimensions at the first axis of symmetry S_{D}, in the tenth of a millimetre range.

6. Thrust ring (1) according to claim 5, **characterised in that** the variations of the thickness dimensions describing the cross-sectional variation of the thrust ring are, at the inner periphery between the first axis of symmetry S_{D} and the second axis of symmetry S_{DS} extending at right angles to the first axis of symmetry S_{D}, between 0 mm and 0.68 mm and, at the outer periphery, between 0 and 0.8 mm.

7. Thrust ring (1) according to any one of claims 1 to 6, **characterised in that** it is made of a material having an elasticity in the range of 180,000 N/mm² to 230,000 N/mm² inclusive.

8. Thrust ring (1) according to claim 7, **characterised in that** it is made of a heat-treated, in particular case-hardened steel.

9. Thrust ring (1) according to any one of claims 1 to 8, **characterised by** the following features: having means of positioning the position of the machined surface areas in the fitted position in the axial bearing; the means comprise at least one projection, which is disposed on the outer periphery or one of the end faces and which in the fitted state cooperates with a recess provided in an element forming the bearing surroundings.

10. Thrust ring (1) according to any one of claims 1 to 8, **characterised by** the following features: having means of positioning the position of the machined surface areas in the fitted position in the axial bearing; the means comprise at least one recess, which is disposed in one of the end faces and which in the fitted state cooperates with a projection disposed on an element forming the bearing surroundings.

11. Method of manufacturing a thrust ring (1) according to any one of claims 1 to 10 from an annular basic element having at least one flat end face, **characterised by** the following features: under the annular basic element in the region of an, in each case, radially extending axis positionable through the centre, in particular an axis of symmetry, an element of predefined height extending along said axis of symmetry is laid as an underfilling against the flat end face and is supported relative to a base surface; the annular basic element in the region of a further axis of symmetry, which is aligned at right angles to the axis of symmetry, at which the underfilling is effected, and likewise extends through the centre, is braced relative to the base surface or a surface disposed in the vertical direction at a lower height than the base surface; a grinding means, which with regard to its grinding edge is disposed parallel to the base surface or the other surface and above the underfilled flat end face, is operated at the surface of the second end face to produce a cross-sectional variation.

12. Method according to claim 11, **characterised in that** the grinding means is guided parallel to the axis of symmetry, which extends at right angles to the axis of symmetry, at which the underfilling is effected.

13. Method according to claim 11 or 12, **characterised in that** the annular basic element in the initial state has a constant cross-section in the peripheral direction.

14. Method according to any one of claims 11 to 13, **characterised in that** the cross-sectional variation on the annular basic element is determinable by the height of the underfilling and/or the arrangement of the grinding edge.

15. Method according to one of claims 1 to 14, **characterised in that** the underfilling is locked against rotation relative to the annular basic element.

16. Bearing system for a journal of a journal cross in a bearing hole of a joint fork for use in cardan shafts; having a radial bearing, comprising at least one outer race and rolling elements; having an axial bearing disposed in the region of the journal root of the journal; the axial bearing comprises rolling elements, an element carrying an outer race for the rolling elements of the axial bearing, and an element carrying an inner race for the rolling elements; the element carrying an inner race for the rolling elements is formed by a thrust ring (1) according to any one of claims 1 to 10.

17. Bearing system according to claim 16, **characterised in that** the element carrying an outer race for the rolling elements of the axial bearing is formed by the outer race of the radial bearing or is supported axially against the latter.

18. Bearing system for a journal of a journal cross in a bearing bore of a joint fork for use in cardan shafts; having a radial bearing, comprising at least one outer race and rolling elements; having an axial bearing disposed in the region of the end of the journal mounted in the joint fork half; the axial bearing comprises rolling elements, an element carrying an outer race for the rolling elements of the axial bearing, and an element carrying an inner race for the rolling elements; the element carrying the outer race for the rolling elements is formed by a thrust ring according to any one of claims 1 to 10.

19. Universal joint arrangement having a journal cross mounted in two joint forks, which are offset by 90° relative to one another; each joint fork has a bearing hole for, in each case, one journal of the journal cross; each journal is mounted by means of a bearing system according to any one of claims 16 to 17 or 18 in a bearing hole of the joint fork.

20. Universal joint arrangement according to claim 19, **characterised in that** the bearing bores take the form of blind holes.

21. Universal joint arrangement according to claim 19 or 20, **characterised in that** the individual joint fork is of a two-part construction.

22. Universal joint arrangement according to any one of claims 19 to 21, **characterised in that** the journals of the journal cross are disposed in two planes, which are disposed parallel and offset relative to one another.

23. Universal joint arrangement according to any one of claims 19 to 22, **characterised in that** in the fitted position, viewed in the direction of rotation of the journal cross, the positioning of the thrust ring is effected in such a way that the cross-section having the greatest thickness variation lies in a plane describable by the journal axes of the journals mounted in the joint forks.

## Revendications

1. Anneau de pression (1), en particulier anneau de pression de palier axial destiné à la formation d'une surface de roulement pour des éléments de roulement, pour utilisation dans des systèmes de palier pour croisillons de joints d'arbres articulés ;
avec une première face frontale plane et une deuxième face frontale ;
avec deux zones de surfaces usinées symétriquement par rapport à un premier axe de symétrie S_{D} de l'anneau de pression sur la deuxième face frontale ;
chacune des zones de surfaces usinées en symétrie en ce qui concerne son tracé dans le sens périphérique, vue en partant du premier axe de symétrie, dans le sens périphérique jusqu'à un deuxième autre axe de symétrie S_{SD}, perpendiculaire au premier axe de symétrie S_{D}, peut être décrite par une modification de section de l'anneau de pression qui est **caractérisée par** une diminution des dimensions en épaisseur décrivant l'aire de la section dans la zone de la périphérie intérieure et de la périphérie extérieure de l'anneau de pression, la zone de périphérie intérieure présentant une moindre diminution d'épaisseur que dans la zone de la périphérie extérieure.

2. Anneau de pression (1) selon la revendication 1, **caractérisé en ce que** les zones de surfaces usinées considérées dans le sens de la circonférence sont agencées à une distance (c) du premier axe de symétrie S_{D}.

3. Anneau de pression (1) selon la revendication 1 ou 2, **caractérisé en ce que** la modification de la section de l'anneau de pression est **caractérisée par** une diminution de l'épaisseur décrivant la surface de section directement sur la circonférence intérieure et sur la circonférence extérieure de l'anneau de pression.

4. Anneau de pression (1) selon l'une des revendications 1 à 3, **caractérisé en ce que** les surfaces de section sur le premier axe de symétrie S_{D} sont **caractérisées par** des épaisseurs égales, y compris entre circonférence intérieure et circonférence extérieure.

5. Anneau de pression (1) selon l'une des revendications 1 à 4, **caractérisé en ce que** les modifications de l'épaisseur décrivant la modification de la section de l'anneau de pression par rapport à l'épaisseur au premier axe de symétrie S_{D} sont de l'ordre du dixième de mm.

6. Anneau de pression (1) selon la revendication 5, **caractérisé en ce que** les modifications de l'épaisseur décrivant la modification de la section de l'anneau de pression atteignent, sur la circonférence intérieure, entre le premier axe de symétrie S_{D} et le deuxième axe de symétrie S_{DS} perpendiculaire au premier axe de symétrie S_{D}, des valeurs situées entre 0 mm et 0,68 mm et entre 0 et 0,8 mm sur la circonférence extérieure.

7. Anneau de pression (1) selon l'une des revendications 1 à 6, **caractérisé en ce que** celui-ci est constitué d'un matériau ayant une élasticité située dans la plage allant de 180000 N/mm² inclus à 230000 N/mm² inclus.

8. Anneau de pression (1) selon la revendication 7, **caractérisé en ce que** celui-ci est constitué d' un acier traité thermiquement, en particulier un acier trempé.

9. Anneau de pression (1) selon l'une des revendications 1 à 8, **caractérisé en ce qu'**il présente les particularités suivantes :
des moyens de positionnement des zones de surfaces usinées en position montée dans le palier de butée ;
les moyens comprennent au moins une saillie placée à la circonférence extérieure ou sur une des faces frontales qui à l'état monté agit de concert avec un évidement prévu sur un élément formant l'environnement du palier.

10. Anneau de pression (1) selon l'une des revendications 1 à 8, **caractérisé en ce qu'**il présente les particularités suivantes :
des moyens de positionnement des zones de surfaces usinées en position montée dans le palier de butée ;
les moyens comprennent au moins un évidement placé sur l'une des faces frontales qui à l'état monté agit de concert avec une saillie placée sur un élément formant l'environnement du palier.

11. Procédé pour la fabrication d'un anneau de pression (1) selon l'une des revendications 1 à 10 à partir d'un élément de base annulaire avec au moins une face frontale plane, **caractérisé par** les dispositions suivantes :
en-dessous de l'élément de base annulaire, dans la zone d'un axe, en particulier un axe de symétrie, pouvant passer par le centre et s'étendant respectivement dans le sens radial, est placé un élément d'une hauteur prédéfinie s'étendant le long de cet axe de symétrie, destiné à être inséré en-dessous de la face frontale plane, lequel élément prend appui contre une surface de base ;
l'élément de base annulaire est dans la zone d'un autre axe de symétrie, qui est dirigé perpendiculairement à l'axe de symétrie où se produit l'insertion en-dessous et qui s'étend également à travers le centre, est assujetti contre la surface de base ou contre une surface agencée dans le sens vertical à une hauteur inférieure à celle de la surface de base ;
un moyen de meulage disposé, pour ce qui est de son arête de meulage, parallèlement à la surface de base ou à l'autre surface et au-dessus de la face frontale plane située en dessous, agit sur la surface de la deuxième face frontale pour produire une modification de section.

12. Procédé selon la revendication 11, **caractérisé en ce que** le moyen de meulage est guidé parallèlement à l'axe de symétrie qui est placé perpendiculairement à l'axe de symétrie auquel se produit l'insertion en-dessous.

13. Procédé selon l'une des revendications 11 ou 12, **caractérisé en ce que** l'élément de base annulaire présente à l'état initial une section constante dans le sens de la circonférence.

14. Procédé selon l'une des revendications 11 à 13, **caractérisé en ce que** la modification de la section de l'élément de base annulaire peut être déterminée par la hauteur d'insertion en-dessous et/ou par la disposition de l'arête de meulage.

15. Procédé selon l'une des revendications 11 à 14, **caractérisé en ce que** l'insertion en-dessous est protégée contre la rotation par rapport à l'élément de base annulaire.

16. Système de palier pour un pivot de croisillon de joint à cardan dans un alésage de roulement d'une fourche de joint articulé pour utilisation dans des arbres articulés ;
avec un palier radial comprenant au moins un anneau extérieur et des éléments de roulement ;
avec un palier de butée agencé dans la zone de départ du pivot ;
le palier de butée comprend des éléments de roulement, un élément portant une piste de roulement extérieure pour les éléments de roulement du palier de butée et un élément portant une surface de roulement intérieure pour les éléments de roulement ;
l'élément portant une surface de roulement intérieure pour les éléments roulants est formé par un anneau de pression (1) selon l'une des revendications 1 à 10.

17. Système de palier selon la revendication 16, **caractérisé en ce que** l'élément portant une piste de roulement extérieure pour les éléments roulants du palier de butée est formé par l'anneau extérieur du palier radial ou prend appui sur ce dernier dans le sens axial.

18. Système de palier pour un pivot d'un croisillon de joint à cardan dans un alésage de palier d'une fourche de joint articulé pour utilisation dans des arbres articulés ;
avec un palier radial comprenant au moins un anneau extérieur et des éléments de roulement ;
avec un palier de butée agencé dans la zone de la face frontale du joint logé dans la moitié de fourche de joint articulé :
le palier de butée comprend des éléments de roulement, un élément portant une surface de roulement extérieure pour les éléments de roulement du palier de butée et un élément portant une piste intérieure pour les éléments de roulement ;
l'élément portant la surface de roulement extérieure pour les éléments de roulement est formé par un anneau de pression selon l'une des revendications 1 à 10.

19. Agencement de joint universel
avec un croisillon de joint à cardan logé dans deux fourches de joint articulé décalées de 90° l'une par rapport à l'autre ;
chaque fourche de joint articulé présente pour chaque pivot respectif du croisillon de joint à cardan un alésage de palier ;
chaque pivot est logé au moyen d'un système de palier selon l'une des revendications 16 à 17 ou 18 dans un alésage de palier de la fourche de joint articulé.

20. Agencement de joint universel selon la revendication 19, **caractérisé en ce que** les alésages de palier sont réalisés sous forme d'alésages borgnes.

21. Agencement de joint universel selon la revendication 19 ou 20, **caractérisé en ce que** chaque fourche de joint articulé est réalisée en deux parties.

22. Agencement de joint universel selon l'une des revendications 19 à 21, **caractérisé en ce que** les pivots du croisillon de joint à cardan sont agencés dans deux plans espacés et parallèles entre eux.

23. Agencement de joint universel selon l'une des revendications 19 à 22, **caractérisé en ce qu'**à l'état monté, vu dans le sens de rotation du croisillon de joint à cardan, le positionnement de l'anneau de pression est effectué de façon que la section avec la plus forte modification d'épaisseur se situe dans un plan pouvant être décrit par les axes de pivots des pivots logés dans les fourches de joint articulé.
